(19) Europäisches Patentamt
European Patent Office
Office européen des brevets

(11) Veröffentlichungsnummer : **0 050 768**
**B1**

(12) **EUROPÄISCHE PATENTSCHRIFT**

(45) Veröffentlichungstag der Patentschrift : **09.01.85**

(51) Int. Cl.[4] : **C 07 F 7/18**, C 07 F 7/08, C 08 G 77/26

(21) Anmeldenummer : **81108108.2**

(22) Anmeldetag : **09.10.81**

# (54) Verfahren zur Herstellung von Azidogruppen aufweisenden Organosiliciumverbindungen.

(30) Priorität : **25.10.80 DE 3040382**

(43) Veröffentlichungstag der Anmeldung : **05.05.82 Patentblatt 82/18**

(45) Bekanntmachung des Hinweises auf die Patenterteilung : **09.01.85 Patentblatt 85/02**

(84) Benannte Vertragsstaaten : **BE CH DE FR GB IT LI NL**

(56) Entgegenhaltungen :
**CHEMICAL ABSTRACTS, Band 94, Nr. 16, 20. April 1981, Seite 69, Zusammenfassung 122882a. COLUMBUS OHIO (US)**

(73) Patentinhaber : **Degussa Aktiengesellschaft**
**Weissfrauenstrasse 9**
**D-6000 Frankfurt am Main 1 (DE)**

(72) Erfinder : **Karl, Alfons, Dr. Dipl.-Chem.**
**Birkenweg 1**
**D-6450 Hanau 1 (DE)**
Erfinder : **Buder, Wolfgang, Dr. Dipl.-Chem.**
**In der Gartel 1**
**D-6458 Rodenbach 1 (DE)**

**EP 0 050 768 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Silane mit funktionellen Azidogruppen, die über ein Zwischenglied mit einer Kohlenstoffkette an das Siliciumatom gebunden sind, sind bereits bekannt:

So die Gruppe der Silylazidoformiate

$$N_3{-}\underset{\underset{O}{\|}}{C}{-}O{-}R{-}SiR_n^1\ (OR^2)_{3-n}$$

(US-PS 3 705 911, US-PS 3 697 551, GB-PS 1 377 214) und der Silylsulfonsäureazide

$$N_3{-}SO_2{-}R{-}SiR_n^1\ (OR^2)_{3-n}$$

(US-PS 3 705 911, US-PS 3 697 551, GB-PS 1 516 193). Vorgeschlagen wurden auch schon Silylcarbamidsäureazide der Formel

$$N_3{-}\underset{\underset{O}{\|}}{C}{-}NH{-}R{-}SiR_n^1\ (OR^2)_{3-n}.$$

Aus der EP-A-0 018 503 (≙ JP-A-80 131 029) C.A. 94, 122882a, 1981) ist neben anderen Aziden das 3-(Trimethoxisilyl) propylazid bekannt, hergestellt aus 3-Chlorpropyltrimethoxisilan und Natriumazid im Laufe einer 11 Tage dauernden Reaktion.

Diese Azidosilane eignen sich aufgrund ihres bifunktionellen Charakters — sie weisen Alkoxygruppen am Siliziumatom und eine Azidogruppe an einem Zwischenglied auf — als sogenannte Haftvermittler zwischen organischen Polymeren und anorganischen Substraten. Einer breiten Anwendung dieser Azidosilane stehen jedoch die relativ hohen Herstellungskosten und zum Teil auch ihre geringe thermische Stabilität und ihre Hydrolyseempfindlichkeit entgegen.

Gefunden wurde nun ein Verfahren zum Herstellen von Azidogruppen aufweisenden Organosiliciumverbindungen aus Halogensilanen und einem Azid, das dadurch gekennzeichnet ist, daß man Halogensilane der Formel

$$X{-}R{-}SiR_n^1\ (OR^2)_{3-n}, \qquad (I)$$

in der bedeuten

R einen zweiwertigen Kohlenwasserstoffrest mit 1 bis 8 Kohlenstoffatomen, der frei ist von äthylenisch ungesättigten Bindungen und dessen gegebenenfalls vorhandene Kohlenstoffkette gegebenenfalls einmal von —O—, —S— oder —$NR^3$— ($R^3$ = Wasserstoff, Methyl, Äthyl oder Phenyl) unterbrochen ist,

$R^1$ einen einwertigen Alkylrest mit bis zu drei Kohlenstoffatomen, Phenyl, Benzyl oder Tolyl,

$R^2$ einen Alkylrest mit bis zu vier Kohlenstoffatomen, Phenyl, Benzyl oder einen Alkoxyalkylrest mit bis zu insgesamt vier Kohlenstoffatomen,

n Null, 1 oder 2 und

X Chlor oder Brom

mit $LiN_3$, gegebenenfalls unter Mitverwendung eines Phasentranfer-Katalysators, oder mit $NaN_3$, $KN_3$ oder $NH_4N_3$ unter Mitverwendung eines Phasentransfer-Katalysators gegebenenfalls in Gegenwart eines organischen Lösungsmittels, das mindestens einen der Reaktanden zumindest teilweise zu lösen imstande ist, und gegebenenfalls unter Druck, im Molverhältnis von 1 zu 1 bis 1 zu 1,5 umsetzt, wonach gegebenenfalls das abgetrennte Umsetzungsprodukt auf an sich bekannte Weise hydrolysiert oder teilhydrolysiert wird.

Von den genannten Halogensilanen werden solche vorgezogen, in denen n Null ist und R eine zweiwertige aliphatische Kohlenwasserstoffgruppe mit 1 bis 4 Kohlenstoffatomen bedeutet.

Typische Beispiele für erfindungsgemäße Silane sind: Azidomethyltriäthoxysilan, 2-Azidoäthyltrimethoxysilan, 2-Azidoäthyltriäthoxysilan, 3-Azidopropyltrimethoxysilan, 3-Azidopropyltriäthoxysilan, 3-Azidopropylmethyldiäthoxysilan, p-Azidomethylphenyltrimethoxysilan, 4-Azidobutyltri-n-butoxysilan, 5-Azidopentyldimethoxyphenylsilan, 6-Azidohexyldiäthoxybenzylsilan, 7-Azidoheptylmethoxydimethylsilan, 8-Azidooctyläthoxydiäthylsilan, 2-Azide-i-propyldiäthoxyphenylsilan, 2-Azido-i-propyldimethoxybenzyloxysilan, 3-Azidopropyldiäthoxybenzyloxysilan, 3-Azidopropyldiäthoxyphenyloxysilan.

Wenn R einen zweiwertigen Kohlenwasserstoffrest mit unterbrochener Kohlenstoffkette bedeutet, kann R folgende Struktur aufweisen:

$—CH_2—S—CH_2—$ ; $—CH_2—O—CH_2—$ ; $—CH_2—NH—CH_2—$ ; $—CH_2—S—CH_2CH_2—$ ;
$—CH_2—O—CH_2CH_2—$ ; $—CH_2—NH—CH_2CH_2—$ ; $—CH_2CH_2—S—CH_2CH_2—$ ; $CH_2CH_2—O—CH_2CH_2—$ ;
$—CH_2CH_2—NH—CH_2CH_2—$ ; $—CH_2CH_2CH_2—O—CH_2CH_2—$ ; $—CH_2CH_2CH_2—NH—CH_2CH_2—$ ;
$—CH_2CH_2CH_2—S—CH_2CH_2—$ ; $—CH_2CH_2CH_2CH_2—O—CH_2CH_2—$ ;

$—CH_2CH_2CH_2CH_2—NH—CH_2CH_2—$ ; $—CH_2CH_2CH_2CH_2CH_2—S—CH_2CH_2—$ ;
$—CH_2CH_2CH_2CH_2CH_2—O—CH_2CH_2—$ ; $—CH_2CH_2CH_2CH_2CH_2—NH—CH_2CH_2—$ ;
$—(CH_2)_3—N(CH_3)—(CH_2)_3—$ ; $—CH_2CH(CH_3)—N(CH_3)—CH_3CH(CH_3)—$ ;
$—(CH_2)_4—N(C_2H_5)—(CH_2)_4$ ; $—(CH_2)_4—N(C_6H_5)—(CH_2)_4—$.

Bei der Umsetzung der Halogenorganylalkoxysilane der Formel I mit einem Alkaliazid oder Ammoniumazid, wird gegebenenfalls in Gegenwart eines Fest-Flüssig-Phasentransfer-Katalysators in Mengen von 0,1 bis 12 Molprozent, bezogen auf das Alkaliazid oder Ammoniumazid, gearbeitet. Die betreffende Umsetzung läuft nach folgender Gleichung ab :

$$(R^2O)_{3-n}R_n^1Si—R—X + MN_3 \rightarrow (R^2O)_{3-n}R_n^1Si—R—N_3 + MX$$

(M = Alkali oder Ammonium).

Hierin haben die einzelnen Symbole die oben bereits erläuterten Bedeutungen. Zur Durchführung der Reaktion ist die Verwendung eines Katalysators nicht immer erforderlich. So ist für die Umsetzung mit Lithiumazid kein Katalysator notwendig. Dagegen wird bei der Umsetzung von Bromalkoxysilanen mit Natriumazid die Reaktion durch einen Katalysator beschleunigt. Für die Umsetzung der entsprechenden chlorsubstituierten Verbindungen mit Natriumazid ist die Verwendung eines Katalysators erforderlich. Als Katalysatoren werden an sich bekannte Phasentransfer-Katalysatoren eingesetzt (siehe : z. B. E.V. Dehmlow : « Fortschritte der Phasentransfer-Katalyse » in Angew. Chem. *89*, 521-533 (1977)). Davon eignen sich insbesondere die Oniumsalze wie die quartären Ammoniumsalze mit am Stickstoffatom befindlichen organischen Resten wie zum Beispiel Alkylreste und deren Gemische ; ferner eigenen sich Phosphoniumsalze, Arsoniumsalze und deren Gemische. Weiterhin sind Kronenäther geeignete Katalysatoren. Zu den Phasentransfer-Katalysatoren wird auf die diesbezügliche Literatur verwiesen, z. B. auf das Buch von E.V. Dehmlow/S.S. Dehmlow « Phase transfer catalysis ». Die Kronenäther (siehe SYNTHESIS *1976*, Seiten 168 bis 184) werden im allgemeinen in größeren Mengen als beispielsweise quartäre Ammoniumverbindungen benötigt. Mengen bis zu etwa 10 Molprozent Kronenäther sind nicht ungewöhnlich.

Die Reaktion kann direkt mit den Reaktanden ausgeführt werden, soweit mindestens einer derselben bei der Reaktionstemperatur oder vorzugsweise bei Zimmertemperatur flüssig ist. Dabei werden im allgemeinen Temperaturen zwischen etwa 80 °C, vorzugsweise 100 °C, und etwa 180 °C, vorzugsweise 150 °C, benötigt.

Es kann jedoch vorteilhaft sein, die Reaktion in Gegenwart einer organischen Flüssigkeit, die die Reaktanden zumindest teilweise zu lösen imstande ist, durchzuführen. Solche Flüssigkeiten, die im allgemeinen als Lösungs- oder Verdünnungsmittel bezeichnet werden, sind zum Beispiel Alkohole, insbesondere einwertige Alkohole wie die niedrigaliphatischen Alkohole Methanol, Äthanol, Isopropanol, n-Propanol, Butanole und höhere entsprechende Alkohole, ferner Ketone wie Dimethyl-, Diäthyl-, Methyläthylketon und weitere an sich bekannte höhere Ketone sowie cyclische Ketone wie zum Beispiel Dioxan und Tetrahydrofuran, ferner Chlorkohlenwasserstoffe wie 1,2-Dichloräthan, Tetrachloräthan, Trichloräthylen, Chloroform, Tetrachloräthylen, Dichlor-, Tetrachlor- und Hexachlorbenzol, ferner aliphatische Nitroverbindungen (Nitroalkane) wie Nitromethan, Nitroäthan, Nitropropane und höhere derartige Nitroverbindungen, weiterhin Dimethylformamid, Diäthylformamid und die flüssigen Alkylcyanide wie Acetonitril, Propionitril und die sich anschließenden höheren Cyanide. Die Reaktionstemperaturen bei Anwesenheit der organischen Flüssigkeiten (Lösungsmittel) liegen zwischen etwa Zimmertemperatur oder vorzugsweise leich höherer Temperatur von etwa 25 °C und dem Siedepunkt des Lösungsmittels bezeihungsweise des Reaktionsgemisches.

Die Durchführung der Reaktion unter Druck ist im allgemeinen nicht erforderlich, kann aber zweckmäßig sein, beispielsweise bei der Umsetzung von Chlororganylalkoxysilanen mit Natriumazid in Äthanol, wobei vorzugsweise unter dem Eigendruck des Lösungsmittels bei etwa 110 bis 130 °C gearbeitet wird.

Das Molverhältnis der Halogensilane gemäß der obigen Formel I zu den erfindungsgemäß zu verwendenden Aziden beträgt 1 zu 1 bis 1 zu 1,5, vorzugsweise bis 1 zu 1,2. Insbesondere wird die Umsetzung bei einem 10 prozentigen Überschuß des Azids wie zum Beispiel an Natriumazid ausgeführt. Die Ausbeuten an Azidosilanen liegen, wie die Beispiel zeigen, in beträchtlicher Höhe, das heißt sie betragen bis zu 95 % (bezogen auf das Gewicht des nichtüberschüssigen Reaktanden), je nach Reaktivität der eingesetzten Reaktanden.

Die Azidosilane sind farblose, destillierbare Flüssigkeiten von modrigem Geruch. Sie sind weder schlag- noch stoßempfindlich. Sie haben ferner den Vorteil, daß ihre Azidogruppen hydrolysestabil sind. Daher lassen sich aus ihnen hydrolytisch wie zum Beispiel durch partielle Hydrolyse der Alkoxysilylgruppe(n) Hydrolyseprodukte in Form von Siloxanen herstellen, ohne daß die Azidogruppe abgespalten wird. Dabei bilden sich beständige Si—O—Si-Brücken aus, und die beiden außen am Molkül befindlichen Azidogruppen können für Folgereaktionen ausgenutzt werden. Zum Beispiel können letztere unter thermischer oder photochemischer Stickstoffabspaltung über die Nitrenzwischenstufe kovalente Bindungen eigehen, wie etwa zu organischen Polymeren.

Die beschriebene Hydrolyse braucht nicht vollständig zu sein, so daß auch Teilhydrolysate entstehen.

Diese Teilhydrolysate entstehen insbesondere, wenn die Silane mehrere Alkoxysilylgruppen im Molekül besitzen.

Die Organosiliziumverbindungen sind ferner als Zwischenprodukte mit Alkoxygruppen zu Kondensationsreaktionen fähig. Die Hydrolyse wie auch die Kondensationsreaktionen werden nach an sich bekannten Verfahren ausgeführt. Sie führen zu höhermolekularen Verbindungen mit zum Beispiel geringer Flüchtigkeit oder höheren Siedepunkten.

Die neuen Azidogruppen aufweisenden Organosiliziumverbindungen haben den weiteren Vorteil, thermisch recht stabil zu sein. So zersetzt sich zum Beispiel das Azidopropyltriäthoxysilan erst oberhalb von 185 °C langsam unter Stickstoffentwicklung. Vergleichweise zersetzen sich die bekannten Säureazide der allgemeinen Formel $R—CO—N_3$ bereits beim Erwärmen in benzolischer Lösung beim Arbeiten unter Rückfluß. Die Azidosilane und -siloxane sind nach den oben dargelegten Herstellungsverfahren leicht verfügbare Organosiliziumverbindungen geworden.

Die nachfolgenden Beispiele sollen die Erfindung erläutern, aber nicht darauf beschränken. In diesen Beispielen sind die Elementaranalysen und die Ausbeuten stets in Gewichtsprozent angegeben. Die berechneten Werte der Elementaranalyse sind in Klammern hinzugefüft.

Beispiel 1

Herstellung von 3-Azidopropyltriäthoxysilan nach verschiedenen Methoden.

a) 1,0 Mol 3-Chlorpropyltriäthoxysilan (Cl-PTES) und 1,1 Mol Natriumazid wurden zusammen in einem 500 ml fassenden Dreihalskolben aus Glas mit Rückflußkühler und Magnetrührer in Gegenwart von 5 Molprozent eines Katalysators auf Basis eines Gemisches von Tris(n-$C_8$-bis-$C_{10}$-alkyl)methylammoniumchlorid unter Rühren drei Stunden auf 140 °C erhitzt. Die daran anschließend ausgeführte Rektifikation unter vermindertem Druck ergab das 3-Azidopropyltriäthoxysilan ($N_3$-PTES) in einer Ausbeute von 95 Gewichtsprozent. Das $N_3$-PTES hatte folgende Kenndaten :

Kp : 76-78 °C bei einem Unterdruck von 0,9 mbar.
$\nu$ ($N_3$) = 2 095 $cm^{-1}$ ($\nu$ ($N_3$) bedeutet die Valenzschwingung der Azidogruppe im IR-Spektrum).

Die Elementaranalyse ergab folgende Werte in Gewichtsprozent :
C : 43,93 (43,70). H : 8,75 (8,56). N : 16,68 (16,99)
Die berechneten Werte sind in den Klammern hinzugefügt.

b) 1,0 Mol Cl-PTES und 1,1 Mol Natriumazid in 500 ml Acetonitril wurden in Gegenwart von 3 Molprozent des gleichen Katalysators wie unter a) sieben Stunden unter Rühren und Rückfluß erhitzt. Das ausgefallene Salz wurde abgetrennt. Die anschliessende Destillation unter vermindertem Druck ergab das $N_3$-PTES jetzt in einer Ausbeute von 92 Gewichtsprozent.

c) bis h) Die folgenden Herstellungsmethoden wurden in Analogie zu b) durchgeführt, wobei jedoch in Abänderung jeweils Äthanol, Dioxan, Aceton, 1,2-Dichloäthan, Nitroäthan und Dimethylformamid als Lösungsmittel eingesetzt wurden. Die Reaktion in Äthanol wurde in einem Autoklaven bei 130 °C durchgeführt ; ferner noch jeweils in Dioxan, Aceton, in 1,2-Dichloräthan und in Nitromethan beim Siedepunkt des Reaktionsgemisches und weiterhin noch in Dimethylformamid bei 140 °C durchgeführt. Die Ausbeuten an $N_3$-PTES lagen jeweils entsprechend zwischen etwa 80 und 95 Gewichtsprozent.

i) 1,0 Mol Cl-PTES und 1,2 Mol Lithiumazid in 500 ml Äthanol wurden zwölf Stunden unter Rühren und Rückfluß erhitzt. Nach Abtrennung des Salzes lieferte die dann folgende Destillation unter vermindertem Druck die Verbindung $N_3$-PTES in einer Ausbeute von 73 Gewichtsprozent.

j) 1,0 Mol 3-Brompropyltriäthoxysilan und 1,1 Mol Natriumazid wurden in Gegenwart von 3 Molprozent des unter a) beschriebenen Katalysators 8 Stunden in 500 ml Äthanol unter Rühren und Rückfluß erhitzt. Nach Abtrennen des ausgefallenen Salzes ergab die nachfolgende Destillation unter vermindertem Druck das $N_3$-PTES in einer Ausbeute von 89 Gewichtsprozent.

Beispiel 2

Herstellung von 3-Azidopropyltrimethoxysilan.

a) 1,0 Mol 3-Brompropyltrimethoxysilan (Br-PTMS) und 1,1 Mol Natriumazid wurden in Gegenwart von 3 Molprozent des in Beispiel 1a) beschriebenen Katalysators in 500 ml Methanol während 12 Stunden unter Rühren und Rückfluß erhitzt. Nach Abtrennen der Salze ergab die nun folgende Destillation unter vermindertem Druck das 3-Azidopropyltrimethoxysilan in einer Ausbeute von 91 Gewichtsprozent. Für die Verbindung wurden folgende Kenndaten bestimmt :

KP : 49-50 °C (bei 1,1 mbar) ;
$\nu$ ($N_3$) = 2 095 $cm^{-1}$.

Die Elementaranalyse ergab folgende Werte :
C : 35,22 (35,10). H : 7,40 (7,36). N : 20,41 (20,47).
Berechnete Werte wiederum in Klammern angegeben.

b) 1,0 Mol 3-Chlorpropyltrimethoxysilan und 1,1 Mol Natriumazid wurden in Gegenwart von 3 Molprozent des in Beispiel 1a) beschriebenen Katalysators in 500 ml Acetonitril acht Stunden unter Rühren und unter Rückfluß erhitzt. Nach Abtrennung der Salze ergab die nachfolgende Destillation unter vermindertem Druck das 3-Azidopropyltrimethoxysilan in einer Ausbeute von 95 Gewichtsprozent.

Beispiel 3

Herstellung von 3-Azidopropylmethyldiäthoxysilan.

1,0 Mol 3-Chlorpropylmethyldiäthoxysilan und 1,1 Mol Natriumazid wurden in Gegenwart von 5 Molprozent des im Beispiel 1a) beschriebenen Katalysators drei Stunden unter Rühren auf 140 °C erhitzt. Nach der Destillation unter vermindertem Druck wurde das 3-Azidopropylmethyldiäthoxysilan in einer Ausbeute von 94 Gewichtsprozent erhalten.
Von dieser Verbindung wurden folgende Kenndaten ermittelt :

Kp : 56-58 °C (1,33 mbar).
$\nu$ ($N_3$) = 2 090 $cm^{-1}$.

Elementaranalyse :
C : 44,19 (43,80). H : 9,55 (9,65). N : 18,91 (19,16).

Beispiel 4

Herstellung von 3-Azidopropyltris(methoxyäthoxy)-silan.

1,0 Mol 3-Chlorpropyltris(methoxyäthoxy)silan und 1,1 Mol Natriumazid in 500 ml Acetonitril wurden in Gegenwart von 5 Molprozent des in Beispiel 1a) beschriebenen Katalysators acht Stunden unter Rückfluß und Rühren erhitzt. Nach Abtrennung der Salze ergab die nachfolgende Destillation unter vermindertem Druck das 3-Azidopropyltris(methoxyäthoxy)silan in einer Ausbeute von 84 Gewichtsprozent mit folgenden Kenndaten :

Kp : 120 °C (0,01 mbar) ;
$\nu$ ($N_3$) = 2 095 $cm^{-1}$.
Ergebnisse der Elementaranalyse :
C : 42,82 (42,71). H : 8,20 (8,06). N : 12,10 (12,45).

Beispiel 5

Herstellung von 2 Azidoäthyltrimethoxysilan.

1,0 Mol 2-Chloräthyltrimethoxysilan und 1,1 Mol Natriumazid in 500 ml Acetonitril wurden in Gegenwart von 3 Molprozent des in Beispiel 1a) beschriebenen Katalysators zehn Stunden unter Rühren und Rückfluß erhitzt. Nach Abtrennung der Salze ergab die anschließend vorgenommene Destillation unter vermindertem Druck das 2-Azidoäthyltrimethoxysilan in einer Ausbeute von 61 Gewichtsprozent mit den folgenden Kenndaten :

Kp : 54-56 °C (1,33 mbar) ;
$\nu$ ($N_3$) = 2 090 $cm^{-1}$.

Die Elementaranalyse erbrachte folgende Ergebnisse :
C : 31,42 (31,40). H : 7,06 (6,85). N : 21,60 (21,97).

Beispiel 6

Herstellung von 2-Azidoäthyltriäthoxysilan.

1,0 Mol 2-Chloräthyltriäthoxysilan und 1,1 Mol Natriumazid in 500 ml Acetonitril wurden in Gegenwart von 3 Molprozent des in Beispiel 1a) beschriebenen Katalysators zehn Stunden unter intensivem

Rühren und unter Rückfluß erhitzt. Nach Abtrennung der Salze ergab die nachfolgende Destillation unter vermindertem Druck das 2-Azidoäthyltriäthoxysilan in einer Ausbeute von 69 Gewichtsprozent mit folgenden Kenndaten :

Kp : 68-70 °C (2,0 mbar) ;
$\nu$ ($N_3$) = 2 090 $cm^{-1}$.

Ergebnisse der Elementaranalyse :
C : 41,57 (41,18). H : 8,31 (8,21). N : 17,66 (18,01).

Beispiel 7

Herstellung von Azidomethyltriäthoxysilan.

0,5 Mol Chlormethyltriäthoxysilan und 0,6 Mol Lithiumazid in 250 ml Äthanol wurden zwölf Stunden unter Rühren und Rückfluß erhitzt. Nach Abtrennung des Salzes und nach der darauf erfolgenden Destillation unter vermindertem Druck wurde das Azidomethyltriäthoxysilan in einer Ausbeute von 70 Gewichtsprozent erhalten. Die Kenndaten dieser Verbindung sind :

Kp : 90-94 °C (21,3 mbar) ;
$\nu$ ($N_3$) = 2 095 $cm^{-1}$.

Die Elementaranalyse ergab folgende Werte :
C : 38,52 (38,34). H : 8,03 (7,81). N : 19,26 (19,16).

Beispiel 8

Herstellung von p-Azidomethylphenyltrimethoxysilan.

1,0 Mol p-Chlormethylphenyltrimethoxysilan und 1,1 Mol Natriumazid wurden in Gegenwart von 5 Molprozent des im Beispiel 1a) beschriebenen Katalysators drei Stunden unter Rühren auf 150 °C erhitzt. Dann wurde das entstandene Salz abgetrennt und die nachfolgende Destillation unter vermindertem Druck ergab das p-Azidomethylphenyltrimethoxysilan in einer Ausbeute von 89 Gewichtsprozent mit folgenden Kenndaten :

Kp : 94-96 °C (0,3 mbar) ;
$\nu$ ($N_3$) = 2 095 $cm^{-1}$.

Die Elementaranalyse ergab folgende Werte :
C : 46,90 (47,41). H : 6,11 (5,97). N : 16,38 (16,59).

Beispiel 9

1,0 Mol Cl-PTES und 1,1 Mol Natriumazid wurden in Gegenwart von 5 Molprozent 18-Krone-6 (1,4,7,10,13,16-Hexaoxacyclooctadecan) als Katalysator in 500 ml Acetonitril acht Stunden unter intensivem Rühren und unter Rückfluß erhitzt. Das ausgefallene Natriumchlorid wurde abgetrennt. Die anschließende Destillation unter vermindertem Druck von 0,9 mbar ergab das $N_3$-PTES in einer Ausbeute von 83 Gewichtsprozent.

Beispiel 10

Unter Verwendung von 3 Molprozent des Benzyltriäthylammoniumchlorids als Katalysator wurden 1,0 Mol Cl-PTES und 1,1 Mol Natriumazid in 500 ml Acetonitril acht Stunden unter intensivem Rühren und unter Rückfluß erhitzt. Das ausgefallene Salz wurde abgetrennt. Die anschließende Destillation unter vermindertem Druck ergab das $N_3$-PTES in diesem Falle in einer Ausbeute von 93 Gewichtsprozent.

Beispiel 11

1,0 Mol Cl-PTES und 1,1 Mol Natriumazid in 500 ml Acetonitril wurden in Gegenwart von 3 Molprozent Tributylhexadecylphosphoniumbromid als Katalysator acht Stunden unter intensivem Rühren und unter Rückfluß erhitzt. Dabei fiel Kochsalz aus. Dieses wurde abgetrennt, und die anschließende Destillation unter vermindertem Druck ergab das $N_3$-PTES jetzt in einer Ausbeute von 90 Gewichtsprozent.

Aus den erfindungsgemäßen Alkoxysilylgruppen aufweisenden Azido-Verbindungen lassen sich nach bekannten Verfahren die entsprechenden Hydrolyseprodukte, also Siloxane, herstellen. Im folgenden Beispiel wird ein derartiges Herstellungsverfahren beschrieben.

Beispiel 12

In einem üblichen einen Liter fassenden Glaskolben mit Rührwerk, Tropftrichter und Thermometer wurde zu 2 Mol $N_3$-PTES bei Zimmertemperatur ein Gemisch aus 1 Mol Wasser und 50 ml Äthanol unter Rühren langsam hinzutropfen gelassen. Nach zweistündigem Rühren, ebenfalls bei Zimmertemperatur, wurde die Reaktion abgeschlossen und das Äthanol unter vermindertem Druck von 0,133 bar abgezogen. Die zurückbleibende klare Flüssigkeit, das « Dimere » des $N_3$-PTES, liegt bereits als analysenreine Verbindung vor.

Die Umsetzung war praktisch vollständig nach folgender Gleichung abgelaufen :

$N_3(CH_2)_3Si(OC_2H_5)_3 + HOH + (C_2H_5O)_3Si(CH_2)_3N_3$

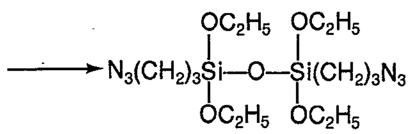 $+ 2\ C_2H_5OH$

Von diesem Siloxan wurden folgende Kenndaten ermittelt :

$\nu\ (N_3) = 2\,090\ cm^{-1}$.
Molgewicht : 420,62
Summenformel : $C_{14}H_{32}O_5Si$

Gewichtsanalytisch wurden folgende Werte in Prozent bestimmt :
C : 40,18 (39,98). H : 8,06 (7,67). N 19,54 (19,98).
Die berechneten Werte sind in Klammern hinzugefügt worden.

Die Hydrolyse oder Teilhydrolyse kann sogleich im Anschluß an die Substitutionsreaktion, gegebenenfalls im gleichen Reaktionsgefäß, ausgeführt werden.

Die Silane und Siloxane können als Zwischenprodukte noch für weitere Synthesen eingesetzt werden ; so kann beispielsweise die Azidogruppe reduziert oder an eine ungesättigte Verbindung angelagert werden.

**Ansprüche**

1. Verfahren zum Herstellen von Azidogruppen aufweisenden Organosiliciumverbindungen aus Halogensilanen und einem Azid, dadurch gekennzeichnet, daß man Halogensilane der Formel

$$X—R—SiR_n^1\ (OR^2)_{3-n}, \qquad (I)$$

in der bedeuten

R einen zweiwertigen Kohlenwasserstoffrest mit 1 bis 8 Kohlenstoffatomen, der frei ist von äthylenisch ungesättigten Bindungen und dessen gegebenenfalls vorhandene Kohlenstoffkette gegebenenfalls einmal von —O—, —S— oder $—NR^3—$ ($R^3$ = Wasserstoff, Methyl, Äthyl oder Phenyl) unterbrochen ist,

$R^1$ einen einwertigen Alkylrest mit bis zu drei Kohlenstoffatomen, Phenyl, Benzyl oder Tolyl,

$R^2$ einen Alkylrest mit bis zu vier Kohlenstoffatomen, Phenyl, Benzyl oder einen Alkoxyalkylrest mit bis zu insgesamt vier Kohlenstoffatomen,

n Null, 1 oder 2 und

X Chlor oder Brom,

mit $LiN_3$, gegebenenfalls unter Mitverwendung eines Phasentransfer-Katalysators, oder mit $NaN_3$, $KN_3$ oder $NH_4N_3$ unter Mitverwendung eines Phasentransfer-Katalysators, gegebenenfalls in Gegenwart einer bei Zimmertemperatur flüssigen organischen Verbindung, die mindestens einen der Reaktanden zumindest teilweise zu lösen imstande ist, und gegebenenfalls unter Druck, im Molverhältnis von 1 zu 1 bis 1 zu 1,5 umsetzt, danach gegebenenfalls das Umsetzungsprodukt auf an sich bekannte Weise hydrolisiert oder teilhydrolisiert.

2. Verfahren nach Anspruch 1, dadurch gekennzeichnet, daß man die Umsetzung bei einem 10 prozentigen Überschuß an $LiN_3$, $NaN_3$, $KN_3$ oder $NH_4N_3$ ausführt.

3. Verfahren nach den Ansprüchen 1 und 2, dadurch gekennzeichnet, daß man als Katalysator bei der Umsetzung eines chlorsubstituierten Silans der Formel I mit Natriumazid einen Fest-Flüssig-Phasentransfer-Katalysator in Mengen von 0,1 bis 12 Molprozent verwendet.

4. Verfahren nach den Ansprüchen 1 bis 3, dadurch gekennzeichnet, daß man die Umsetzung in Gegenwart einer organischen Flüssigkeit bei Zimmertemperatur bis zur Siedetemperatur des Reaktionsgemisches durchführt.

5. Verfahren nach den Ansprüchen 1 bis 3, dadurch gekennzeichnet, daß man die Reaktanden selbst bei Temperaturen zwischen 80 °C und 180 °C umsetzt.

**Claims**

1. A process for the production of organosilicon compounds having azido groups from halosilanes and an azide, characterised in that halosilanes corresponding to the formula

$$X—R—SiR_n^1\ (OR^2)_{3-n} \qquad (I)$$

wherein

R represents a divalent hydrocarbon radical having from 1 to 8 carbon atoms which is free of ethylenically unsaturated bonds and the carbon chain which may be present is optionally interrupted once by —O—, —S— or —NR³— ($R^3$ = hydrogen, methyl, ethyl or phenyl),

$R^1$ represents a monovalent alkyl radical having up to three carbon atoms, phenyl, benzyl or tolyl,

$R^2$ represents an alkyl radical having up to four carbon atoms, phenyl, benzyl or an alkoxy alkyl radical having up to in total four carbon atoms,

n represents 0, 1 or 2 and

X represents chlorine or bromine,

are reacted

with $LiN_3$, optionally while simultaneously using a phase transfer catalyst, or with $NaN_3$, $KN_3$ or $NH_4H_3$ while simultaneously using a phase transfer catalyst optionally in the presence of an organic compound which is liquid at room temperature and which is capable of at least partially dissolving at least one of the reactants and optionally under pressure, in a mol ratio of from 1 : 1 to 1 : 1.5, the reaction product is optionally subsequently hydrolysed or partially hydrolysed in known manner.

2. A process according to claim 1, characterised in that the reaction is carried out with a 10 % excess of $LiN_3$, $NaN_3$, $KN_3$ or $NH_4N_3$.

3. A process according to claims 1 and 2, characterised in that a solid-liquid phase transfer catalyst is used in a quantity of from 0.1 to 12 mol.% as a catalyst in the reaction of a chloro-substituted silane corresponding to the formula I with sodium azide.

4. A process according to claims 1 to 3, characterised in that the reaction is carried out in the presence of an organic liquid at a temperature ranging from room temperature to the boiling temperature of the reaction mixture.

5. A process according to claims 1 to 3, characterised in that the reactants are reacted at a temperature of from 80 °C to 180 °C.

**Revendications**

1. Procédé de préparation de composés organosiliciques contenant des groupements azido, à partir de silanes halogénés et d'un azide, procédé caractérisé en ce que l'on fait réagir un halogénosilane de formule

$$X—R—SiR_n^1\ (OR^2)_{3-n} \qquad (I)$$

où les symboles signifient :

R un reste hydrocarbure bivalent avec 1 à 8 atomes de carbone, exempt de liaisons insaturées éthyléniques, et dont l'éventuelle chaîne carbonée présente peut être interrompue le cas échéant, une fois, par —O—, —S— ou —NR³— ($R^3$ = hydrogène, méthyle, éthyle ou phényle),

$R^1$ un reste alcoyle monovalent, avec deux à trois atomes de carbone, phényle, benzyle ou tolyle,

$R^2$ un reste alcoyle avec jusqu'à quatre atomes de carbone, phényle, benzyle, ou un reste alcoxyalcoyle avec jusqu'à quatre atomes de carbone au total,

n zéro, 1 ou 2 et

X chlore ou brome,

avec $LiN_3$, éventuellement en utilisant un catalyseur de transfert de phase, ou avec $NaN_3$, $KN_3$ ou $NH_4N_3$ en utilisant un catalyseur de transfert de phase, éventuellement en présence d'un composé organique liquide à la température ambiante et qui est capable de dissoudre au moins partiellement un des partenaires réactionnels, et éventuellement sous pression, dans un rapport molaire de 1 : 1 à 1 : 1,5, après quoi on soumet éventuellement le produit réactionnel, de manière en soi connue, à une hydrolyse totale ou partielle.

2. Procédé selon la revendication 1, caractérisé en ce que l'on effectue la réaction avec un excès de 10 % en $LiN_3$, $NaN_3$, $KN_3$ ou $NH_4N_3$.

3. Procédé selon l'une des revendications 1 et 2, caractérisé en ce que, comme catalyseur, dans la réaction d'un silane chlorosubstitué de formule I avec de l'azide de sodium, on utilise un catalyseur de transfert de phase solide-liquide, dans une proportion de 0,1 à 12 mol.%.

4. Procédé selon l'une quelconque des revendications 1 à 3, caractérisé en ce que l'on effectue la réaction en présence d'un liquide organique, à une température comprise entre la température ambiante et la température d'ébullition du mélange réactionnel.

5. Procédé selon l'une quelconque des revendications 1 à 3, caractérisé en ce que l'on fait réagir les partenaires réactionnels seuls, à une température comprise entre 80 °C et 180 °C.